# EUROPEAN PATENT APPLICATION

(11) **EP 3 324 031 A1**
(43) Date of publication of application: **23.05.2018**
(21) Application number: 16306504.8
(22) Date of filing: 17.11.2016
(51) Int. Cl.: F02M 25/022, F02M 25/028, F02M 25/03, F02M 37/02

(54) **SYSTEM FOR STORING AN AQUEOUS SOLUTION ON-BOARD A VEHICLE**

(71) Applicant: Plastic Omnium Advanced Innovation and Research, 1120 Bruxelles (BE)
(72) Inventor: OP DE BEECK, Joel, 2547 LINT (BE); DUEZ, Laurent, 1180 UCCLE (BE); LEONARD, Stéphane, 1090 BRUXELLES (BE)
(74) Representative: Potdevin, Emmanuel Eric

(57) **Abstract**

A vehicle system comprising a first compartment (100) and a second compartment (200); a feed pump unit (110) having a feed pump outlet (112) for feeding an injector in an injection mode of the feed pump unit with aqueous solution of the first compartment, said feed pump unit being capable of selectively operating in the injection mode and in a suction mode; a bypass circuit (800) between the feed pump outlet and the interior of the first compartment, said bypass circuit including a jet pump (300) having a suction inlet (310), a pressure inlet (320) and a jet pump outlet (330) arranged for returning aqueous solution to the first compartment; said suction inlet (310) receiving aqueous solution from the second compartment; said bypass circuit being configured to be drawing aqueous solution from the second compartment through the suction inlet when the feed pump unit is operating in the suction mode.

## Description

### Field of Invention

The invention relates to a system for storing an aqueous solution, preferably demineralised water, on-board a vehicle, and more in particular to a system for injecting an aqueous solution into an air intake upstream of a combustion chamber or directly in the combustion chamber.

### Background

It is known to inject water into an air intake upstream of a combustion chamber or directly in the combustion chamber, when the load of the engine of a vehicle is high. By injecting water in the air stream, the air is cooled down, resulting in a higher density and hence more air per volume unit, enhancing the combustion. In that manner more power is obtained, i.e. the performance is boosted. The water for injection needs to be stored on-board the vehicle and needs to be available when the vehicle is in operation.

### Summary

It is an object of exemplary embodiments of the invention to provide a vehicle system for storing an aqueous solution on-board a vehicle, comprising a first and a second compartment for storing aqueous solution and allowing on the one hand an improved control of the transfer of aqueous solution from the second compartment to the first compartment, and on the other hand an accurate control of the injection of the aqueous solution.

According to a first aspect there is provided a vehicle system comprising a first compartment and a second compartment, both being adapted for storing an aqueous solution. The vehicle system further comprises a feed pump unit having a feed pump outlet for feeding an injector in an injection mode of the feed pump unit with aqueous solution of the first compartment. The feed pump unit is configured for selectively operating in the injection mode and in a suction mode. The vehicle system further comprises a bypass circuit between the feed pump outlet and the interior of the first compartment, said bypass circuit including a jet pump. The jet pump has a suction inlet, a pressure inlet and a jet pump outlet arranged for returning aqueous solution to the first compartment. The suction inlet is arranged for receiving aqueous solution from the second compartment. The bypass circuit is configured to be drawing aqueous solution from the second compartment through the suction inlet when the feed pump unit is operating in the suction mode and configured not to be drawing aqueous solution from the second compartment when the feed pump unit operates in the injection mode.

By providing a feed pump unit configured to operate in two modes, i.e. an injection mode and a suction mode, on the one hand, and by suitable configuring the bypass circuit, on the other hand, it is achieved that the suction of aqueous solution from the second compartment can be controlled. Further, by providing an injection mode during which no aqueous solution is drawn out of the second compartment, more power is available for injection.

For completeness it is noted that according to the first aspect, during the suction mode aqueous solution is sucked out of the second compartment, wherein optionally at the same time aqueous solution may be fed to an injector. In other words, optionally in the suction mode aqueous solution may also be fed to the injector. Further, during the injection mode the injector is fed with aqueous solution, whilst no aqueous solution is sucked out of the second compartment. However, during the injection mode, in exemplary embodiments there may be a continuous flow through the bypass circuit from the first compartment to the first compartment.

In an exemplary embodiment the feed pump unit is capable of generating a first pressure below a predetermined threshold pressure in the injection mode and a second pressure above the predetermined threshold pressure in the suction mode; and the bypass circuit includes a valve configured to open in the suction mode, and to close in the injection mode. Preferably the valve is a mechanical valve, e.g. a check valve with a spring element. In that manner the control of the mode can be achieved through a compact structure which does not require complex and/or expensive components, whilst at the same time being very robust.

In an exemplary embodiment the vehicle system further comprises a controller configured to control the feed pump unit to generate a first pressure below the predetermined threshold pressure in the injection mode and to generate a second pressure above the predetermined threshold pressure in the suction mode. The predetermined threshold pressure is typically higher than 5 bar, for example between 7 and 8 bar. In this example the first pressure could be e.g. 7 bar and the second pressure 8 bar. The valve should then be configured and arranged such that the valve opens when the generated line pressure is 8 bar and is closed when the generated line pressure is 7 bar.

In an exemplary embodiment the valve is included between the feed pump outlet and the pressure inlet of the jet pump and configured such that it opens when the feed pump unit operates in the suction mode. By including the valve between the feed pump outlet and the pressure inlet of the jet pump, it can be achieved to have no flow in the bypass circuit when the feed pump unit operates in the injection mode. In that manner no power is lost in the bypass circuit during injection. This has the advantage that a smaller feed pump unit may be used. In order to create an additional pressure drop between the valve and the pressure inlet of the jet pump in the suction mode, an orifice element may be added in a line between the valve and the pressure inlet.

In another exemplary embodiment the valve is connected to the suction inlet and configured such that it opens when the feed pump unit operates in the suction mode. By connecting the valve to the suction inlet, it can be achieved that, in the injection mode, there is no suction flow through the suction inlet whilst still having a flow through the jet pump, from the pressure inlet to the jet pump outlet. This may be advantageous for certain types of pumps in order to ensure a minimum flow, e.g. during start-up. In further developed embodiments, in order to limit the flow through the bypass in the injection mode, there may be added an orifice element in a line between the feed pump outlet and the jet pump in order to limit the pressure and flow in the injection mode, whilst creating a suitable pressure drop in the jet pump feed line to generate the nominal required jet pump feed pressure in the suction mode. Further, a check valve may be added in the jet pump feed line in order to ensure that the first compartment remains leak tight after purging of the jet pump feed line.

In a preferred embodiment the first and/or the second compartment is vented.

In an exemplary embodiment the feed pump unit, the jet pump and the valve may be included in a module. More in particular the feed pump and the bypass circuit may be included in a module. Such a module may further comprise a heater configured and arranged for heating at least a flow path through the feed pump unit and the bypass circuit. In that manner, when the aqueous solution is frozen in the first compartment, the heater allows to rapidly defrost an amount of aqueous solution and to start pumping.

In an exemplary embodiment the second compartment is a tank, and the first compartment is integrated in the module such that it is located in the second compartment. The first compartment may then take the form of a so-called swirl pot or bowl ensuring that under various driving and parking positions aqueous solution can be pumped out of the tank. The first compartment may be integrated in a module arranged in an opening in a wall of said tank, wherein the module may also carry the feed pump unit and/or the bypass circuit or parts thereof. The tank may be provided with a filler pipe for filling the tank (and hence also the first compartment located in the tank). In a possible embodiment, the tank has a bottom wall, a top wall and a sidewall connecting the bottom wall with the top wall, wherein an opening is arranged in the bottom wall, wherein, in the mounted position of the tank, the bottom wall corresponds with the lowest face of the tank, and wherein the module is mounted in the opening in the bottom wall of the tank. In an alternative embodiment the module may be arranged in the side wall, in a lower half of the tank.

In an exemplary embodiment the first compartment is a first tank, and the second compartment is a second tank. In that manner aqueous solution may be stored at two different locations in the vehicle at a distance of each other. In such an embodiment an overflow line may be provided between the first tank and the second tank, and one of said first and second tank may be at a higher level than the other one of said first and second tank, wherein said higher one is provided with a filler pipe. In another possible embodiment the first tank may be provided with a filler pipe, wherein a filler line extends between the filler pipe and the second tank. In an exemplary embodiment the first tank has a bottom wall, a top wall and a sidewall connecting the bottom wall with the top wall, wherein an opening is arranged in the bottom wall, wherein, in the mounted position of the first tank, the bottom wall corresponds with the lowest face of the first tank, and wherein a module is mounted in the opening in the bottom wall of the first tank. The module may carry the feed pump unit and/or the bypass circuit or parts thereof

In an exemplary embodiment the vehicle system further comprises: an air intake line upstream of a combustion chamber of an internal combustion engine; an injector configured for injecting aqueous solution in the air intake line or in the combustion chamber; and a feed line between the feed pump outlet and the injector, for feeding said injector with aqueous solution out of the first compartment.

In an exemplary embodiment the vehicle system further comprises any one or more of the following components:
- a level sensor configured for sensing a level of the aqueous solution in the first compartment, wherein the controller is configured for operating the feed pump unit in the suction mode, when a level of the aqueous solution in the first compartment is below a predetermined level;
- a quality sensor arranged downstream of the jet pump to sense the quality of the aqueous solution leaving the jet pump outlet;
- a filter upstream of the feed pump unit for filtering aqueous solution entering the feed pump unit;
- a bio-decontamination device downstream of the jet pump for bio-decontaminating aqueous solution leaving the jet pump outlet.

The aqueous solution is preferably a solution containing at least 90% water, more preferably at least 95% water, and most preferably at least 98% water. The aqueous solution is e.g. demineralized water. In other embodiments an amount of methanol may be added to the aqueous solution to lower the freezing point.

The feed pump unit may comprise a gear pump with a motor. The jet pump is a pump which does not comprise a motor and which comprises a venturi device between the pressure inlet and the outlet of the jet pump.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1A illustrates schematically a cross section of an exemplary embodiment of a vehicle system with a first compartment positioned inside a second compartment;
Figure 1B illustrates a variant of the bypass circuit of the embodiment of figure 1A.
Figure 2A illustrates a cross section of another exemplary embodiment of a module for use in a vehicle system with a first compartment positioned inside a second compartment;
Figures 2B and 2C illustrate variants of the bypass circuit of the embodiment of figure 2A.
Figure 3A illustrates schematically a cross section of an exemplary embodiment of a vehicle system with a first tank as the first compartment and a second tank as a second compartment;
Figure 3B illustrates a variant of the bypass circuit of the embodiment of figure 3A.
Figure 4 illustrates schematically a cross section of another exemplary embodiment of a vehicle system with a first tank as the first compartment and a second tank as a second compartment;
Figure 5 illustrates schematically a cross section of yet another exemplary embodiment of a vehicle system with a first tank as the first compartment and a second tank as a second compartment; and
Figure 6 illustrates schematically a perspective view of an exemplary embodiment of a module for use in a vehicle system.

### Description of embodiments

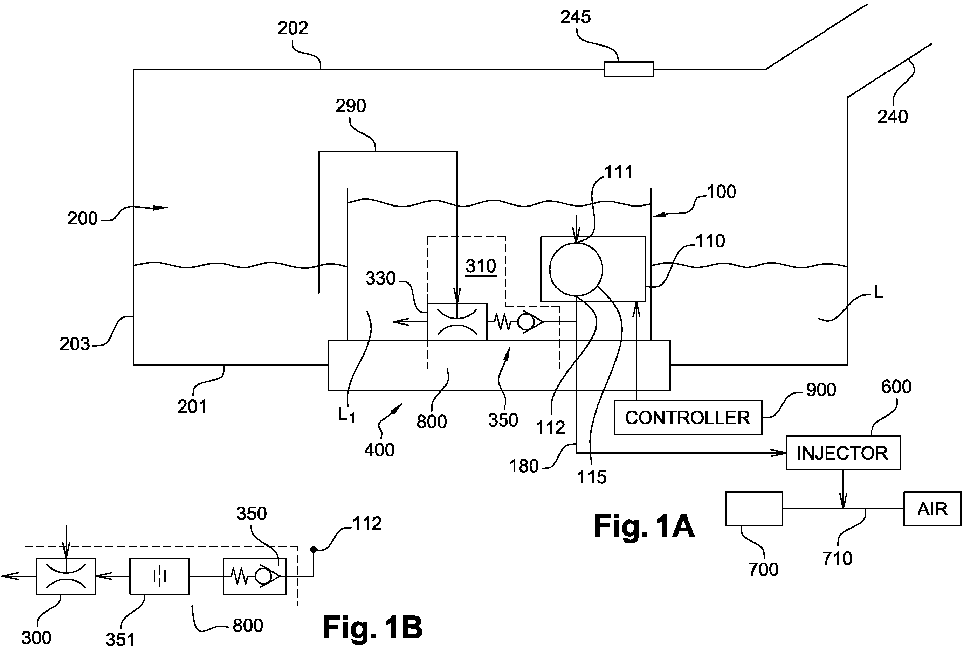

Figure 1 illustrates a vehicle system storing an aqueous solution L. The vehicle system comprises a first compartment 100 for storing aqueous solution L, a second compartment 200 for storing an aqueous solution L, and a module 400. In this embodiment second compartment 200 is a tank, and first compartment 100 is a bowl integrated in module 400, such that the bowl is positioned in the lower half of second compartment 200. Module 400 is arranged in an opening in a wall of tank 200. Tank 200 is provided with a filler pipe 240 for filling tank 200, and hence also compartment 100, with aqueous solution L. Tank 200 is vented via a vent device 245. Tank 200 has a bottom wall 201, a top wall 202 and a sidewall 203 connecting the bottom wall 201 with the top wall 202. An opening is arranged in bottom wall 201. In the mounted position of tank 200, bottom wall 201 corresponds with the lowest face of tank 200. Module 400 is mounted in the opening in bottom wall 201 of tank 200, e.g. by welding or by any other suitable connection means, e.g. using a ring-nut system screwed onto a thread on tank 200, or using a closure system of the bayonet type. In another non-illustrated embodiment the opening may be arranged in sidewall 203, in a lower half of the tank 200.

Module 400 comprises a feed pump unit 110, and a bypass circuit 800 between the feed pump outlet and the interior of the first compartment. Bypass circuit 800 includes a jet pump 300.

Feed pump unit 110 is connected for pumping aqueous solution L from the first compartment 100 to a feed pump outlet 112. Feed pump outlet 112 is intended for being connected to a feed line 180 for feeding, in an injection mode of the feed pump unit 110, aqueous solution L to an injector 600, in order to inject aqueous solution e.g. in an air intake line 710 upstream of a combustion chamber 700 of an internal combustion engine. Alternatively aqueous solution may be injected directly in combustion chamber 700 of the internal combustion engine. More generally, for the described application, the aqueous solution may be injected anywhere as long as the injection is such that the air injected in combustion chamber 700 is cooled. Feed line 180 extends between feed pump outlet 112 and injector 600, for feeding injector 600 with aqueous solution out of first compartment 100. Feed pump unit 110 is capable of selectively operating in an injection mode and in a suction mode, see further.

Jet pump 300 in bypass circuit 800 has a suction inlet 310, a pressure inlet 320 and a jet pump outlet 330 arranged for returning aqueous solution to first compartment 100. Suction inlet 310 is arranged for receiving aqueous solution via suction line 290 from second compartment 200. Bypass circuit 800 is configured for drawing aqueous solution L from second compartment 200 through suction inlet 310 when feed pump unit 110 is operating in the suction mode and for not drawing aqueous solution from second compartment 200 when feed pump unit 110 operates in the injection mode. To that end, bypass circuit 800 includes a valve 350 configured to open in the suction mode, and to close in the injection mode, and feed pump unit 110 is capable of generating a first pressure P1 below a predetermined threshold pressure in the injection mode and a second pressure P2 above the predetermined threshold pressure in the suction mode. Valve 350 is included between feed pump outlet 112 and pressure inlet 320 of jet pump 300 and configured such that it opens when the feed pump unit operates in the suction mode. To control feed pump unit 110 there may be provided a controller 900 configured to control feed pump unit 110 to generate a first pressure P1 below the predetermined threshold pressure in the injection mode and to generate a second pressure P2 above the predetermined threshold pressure in the suction mode. Controller 900 may be mounted on module 400, or may be located remotely from module 400. The predetermined threshold pressure is typically higher than 5 bar, and may be e.g. between 7,3 and 7,7 bar, with P1 = 7 bar and P2 = 8 bar. Preferably valve 350 is a mechanical valve, e.g. a check valve with a spring element configured to open in the suction mode. In the example given valve 350 will open when the line pressure generated by feed pump unit 110 is 8 bar.

For completeness it is noted that according to the embodiment of figure 1A, during the suction mode aqueous solution is sucked out of second compartment 200, wherein at the same time aqueous solution may be fed to injector 600. Further, during the injection mode the injector is fed with aqueous solution from first compartment 100, whilst no aqueous solution is sucked out of second compartment 200.

Figure 1B illustrates a variant of bypass circuit 800 of figure 1A. In figure 1B bypass circuit 800 further comprises an orifice plate 351 between valve 350 and pressure inlet 320 of jet pump 300. Orifice plate 351 is configured to create a pressure drop in the jet pump feed line between valve 350 and pressure inlet 320, in order to generate the nominal required jet pump feed pressure in the suction mode.

In the suction mode, there is a flow path from an inlet 111 of feed pump unit 110 to an outlet 112 of feed pump unit 110 through bypass circuit 800 to outlet 330 of jet pump 300. Suction inlet 310 is connected to a suction line 290 arranged for receiving aqueous solution from the second compartment 200. Outlet 330 of jet pump 300 is arranged for returning aqueous solution from suction inlet 310 and from pressure inlet 320 to first compartment 100. Optionally module 400 may include a heater (not shown in figure 1A) configured and arranged for heating at least the flow path. The heater may be arranged e.g. between feed pump unit 110 and jet pump 300, and/or around feed pump unit 110 and jet pump 300. Preferably the heater is arranged either inside first compartment 100 or in a wall delimiting first compartment 100.

Outlet 112 of feed pump 110 is preferably located at the bottom of feed pump unit 110. Further, preferably jet pump 300 is arranged in a line section extending upwardly (not shown in figure 1A) in module 400, such that the aqueous solution is recirculated upwardly and returned in first compartment 100 at a position which is higher than pump outlet 112, and preferably also higher than pump inlet 111.

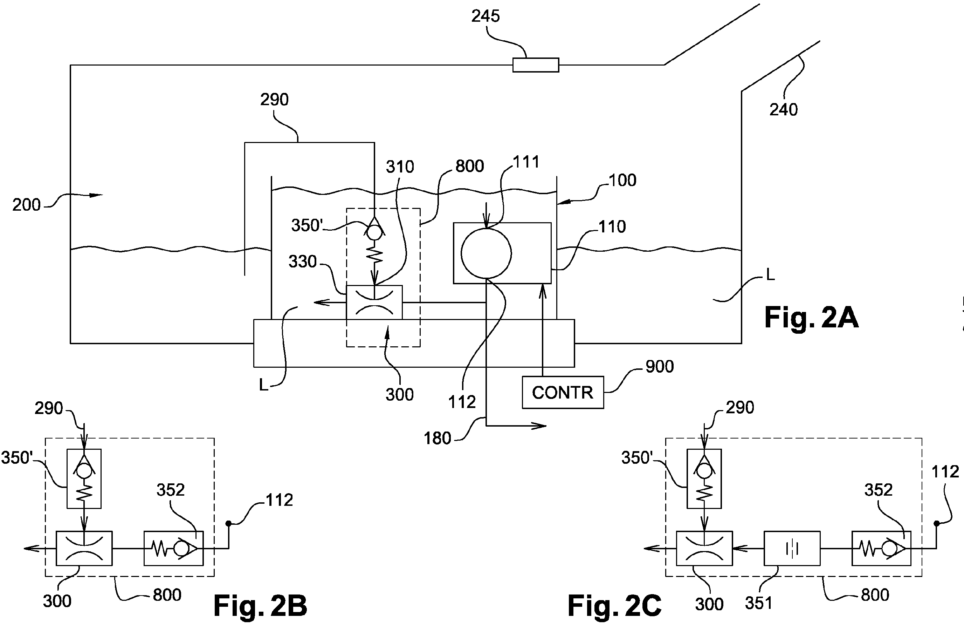

Figure 2A illustrates another exemplary embodiment of a vehicle system in which the same or similar components have been indicated with the same reference numerals as in figure 1A. In the embodiment of figure 2A, valve 350 is omitted, but a valve 350' is connected to suction inlet 310 of jet pump 300 and configured such that it opens when feed pump unit 110 operates in the suction mode. By connecting valve 350' to suction inlet 310, it is achieved that, in the injection mode, there is no suction flow through suction inlet 310 whilst still having a flow through jet pump 300, from pressure inlet 320 to jet pump outlet 330. This may be advantageous for certain types of pumps in order to ensure a minimum flow, e.g. during start-up.

In the embodiment of figure 2A, during the suction mode aqueous solution is sucked out of second compartment 200, wherein optionally at the same time aqueous solution may be fed to an injector 600. Further, during the injection mode the injector is fed with aqueous solution from first compartment 100, whilst no aqueous solution is sucked out of second compartment 200. However, during the injection mode, there is a continuous flow through bypass circuit 800 from first compartment 100 to first compartment 100.

Figure 2B illustrates a variant of the bypass circuit 800 of figure 2A. A check valve 352 is added in the jet pump feed line in order to ensure that the first compartment remains leak tight after purging of the jet pump feed line. Check valve 352 is configured to open when a small pressure drop, e.g. a pressure drop lower than 50 mbar but higher than 1 mbar, is applied across valve 352. In other words, check valve 352 will be open both in the injection mode and in the suction mode.

Figure 2C illustrates another variant of the bypass circuit 800 of figure 2B. In order to limit the flow through bypass circuit 800 in the injection mode, there is added an orifice plate 351 in a line between pressure inlet 320 and check valve 352, in order to limit the pressure and flow in the injection mode, whilst creating a suitable pressure drop in the jet pump feed line to generate the nominal required jet pump feed pressure in the suction mode.

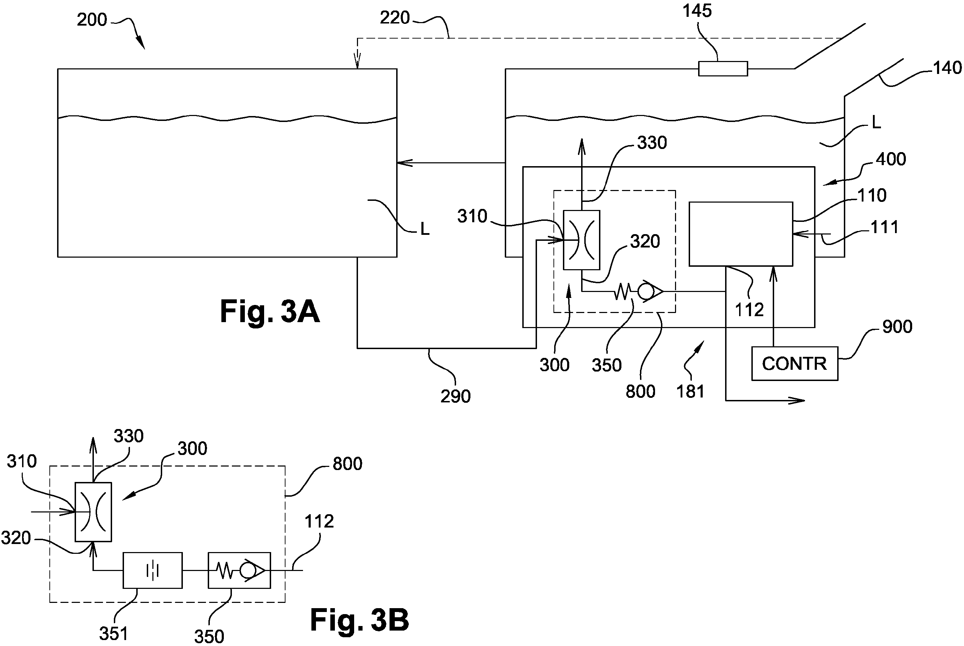

Figure 3A illustrates another vehicle system storing an aqueous solution L. The vehicle system comprises a first tank 100 for storing aqueous solution L, a second tank 200 for storing an aqueous solution L, and a module 400. The module 400 is arranged in an opening in a wall of first tank 100. First tank 100 is provided with a filler pipe 140 for filling first tank 100, and via an overflow line 210, also second tank 200, with aqueous solution L. First tank 100 is vented via a vent device 145. First tank 100 has a bottom wall 101, a top wall 102 and a sidewall 103 connecting bottom wall 101 with top wall 102. An opening is arranged in bottom wall 101. In the mounted position of first tank 100, bottom wall 101 corresponds with the lowest face of first tank 100. Module 400 is mounted in the opening in bottom wall 101 of first tank 100, e.g. by welding or by any other suitable connection means. In another non-illustrated embodiment the opening may be arranged in sidewall 103, in a lower half of the tank 100.

Module 400 comprises a feed pump unit 110, and a bypass circuit including a jet pump 300 and a valve 350, and optionally also a heater 120 (not shown in figure 3). Bypass circuit 800 is similar to bypass circuit 800 of figure 1A and reference is made to the description above of figure 1A. Suction inlet 310 is connected to a suction line 290 arranged for receiving aqueous solution from second tank 200. Outlet 330 of jet pump 300 is arranged for returning aqueous solution from suction inlet 310 and from pressure inlet 320 to first tank 100. The vehicle system may further comprise a controller 900 configured for controlling feed pump unit 110 in a similar manner as described above for figure 1A. The controller may be configured to operate feed pump unit 110 in the injection mode when the level of the aqueous solution in first tank 100 is below a predetermined level. This level may be measured by a level sensor (not shown), preferably included in module 400. An optional heater (not shown) may be configured and arranged for heating at least a flow path through feed pump unit 110 and bypass circuit 800. The heater may be arranged and configured as described above in connection with figure 1A. First tank 100 may be positioned in a vehicle at a higher level than second tank 200. In an alternative embodiment first tank 100 and second tank 200 may be positioned at more or less the same height and a filler line 220 may be provided between filler pipe 140 of first tank 100 and second tank 200.

Figure 3B illustrates a variant of bypass circuit 800 of figure 3A. In figure 3B bypass circuit 800 further comprises an orifice plate 351 between valve 350 and pressure inlet 320 of jet pump 300. Orifice plate 351 is configured to create a pressure drop in the jet pump feed line between valve 350 and pressure inlet 320, in order to generate the nominal required jet pump feed pressure in the suction mode.

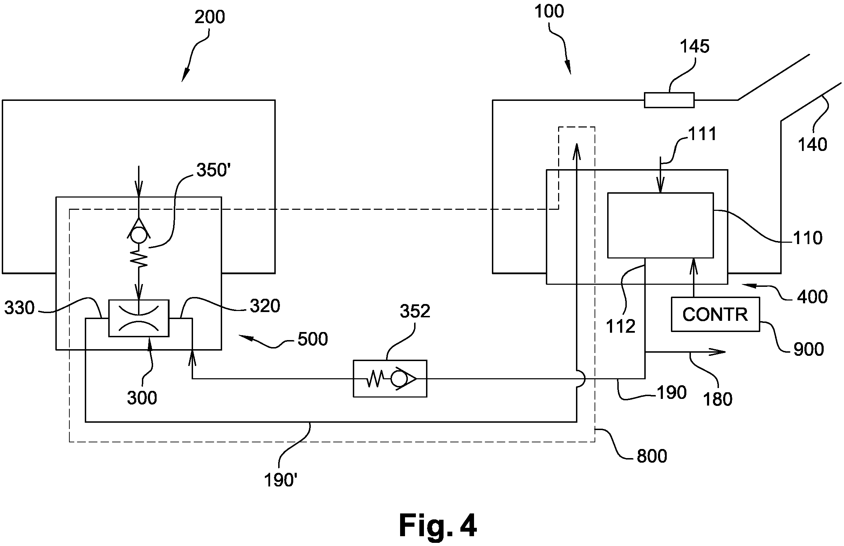

Figure 4 illustrates an embodiment which is similar to the embodiment of figure 3A with this difference that jet pump 300 is not arranged in module 400 but is arranged in a separate module 500 mounted in an opening in bottom wall 201 of second tank 200, and that the bypass configuration of figure 2B is used. However, a skilled person understands that any of the above described bypass circuits 800 may be used in the embodiment of figure 4. A line 190 extends between outlet 112 of feed pump unit 110 and pressure inlet 320. A further line section 190 connects outlet 330 of jet pump 300 with first tank 100 to return aqueous solution from the jet pump 300 to first tank 100. A check valve 352 is arranged in line section 190. Check valve 352 has the same function as in figure 2B. As in the embodiment of figures 1A, 2A and 3A module 400 may comprise additional components such as a heater, a level sensor, a quality sensor, a bio-decontamination device, a filter, etc.

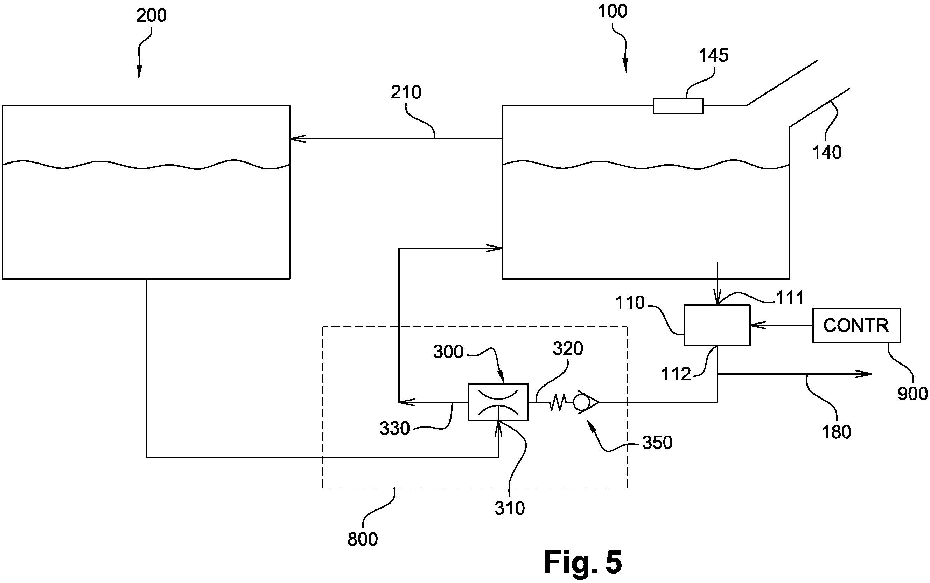

Figure 5 illustrates another exemplary embodiment of a vehicle system with a first tank 100 and a second tank 200 at a distance of first tank 100. First tank 100 is provided with a venting device 145 and with a filler pipe 140 for filling first tank 100, and via an overflow line 210, also second tank 200, with aqueous solution L. The vehicle system comprises a feed pump unit 110, a jet pump 300, and optionally also a heater (not shown in figure 5). Feed pump unit 110 is connected for pumping aqueous solution L from first tank 100 to a feed line 180 as in the embodiment of figure 1A. Jet pump 300 has a suction inlet 310, a pressure inlet 320 and an outlet 330. Feed pump unit 110 is further connected for pumping aqueous solution through a bypass circuit 800. Suction inlet 310 is connected to a suction line 290 arranged for receiving aqueous solution from second tank 200. Outlet 330 of jet pump 300 is arranged for returning aqueous solution from suction inlet 310 and from pressure inlet 320 to first tank 100. The vehicle system further comprises a controller 900 configured for controlling feed pump unit 110 as described above for figure 1A. An optional heater (not shown) may be configured and arranged for heating the feed pump unit 110 and/or bypass circuit 800. The heater may be arranged e.g. around the lines of the bypass circuit 800 and/or around feed pump unit 110 and/or around jet pump 300 and/or around valve 350. First tank 100 may be positioned in a vehicle at a higher level than second tank 200. In an alternative embodiment first tank 100 and second tank 200 may be positioned at more or less the same height and a filler line 220 may be provided between filler pipe 140 of first tank 100 and second tank 200. A skilled person understands that any of the above described bypass circuits 800 may be used in the embodiment of figure 5.

The aqueous solution is preferably a solution containing at least 90% water, more preferably at least 95% water, and most preferably at least 98% water. The aqueous solution is e.g. demineralized water. In other embodiments an amount of methanol may be added to the aqueous solution to lower the freezing point.

In exemplary embodiments of the invention, preferably, feed pump unit 110 is configured to be able to generate a flow, in the injection mode, of between 60 and 100 kg/h through the feed line 180. Further, the controller 900 is preferably configured to control pump unit 110 in function of the load of the engine. When the load reaches a predetermined threshold, the feed pump unit 110 may be controlled to pump with a flow speed within a predetermined range.

Although a gear pump is advantageous for use in exemplary embodiments, also other pumps may be used, e.g. a gerotor pump, a turbine pump, a membrane pump, a piston pump.

In exemplary embodiments of the invention, the heater may be an electrical heater, e.g. a flexible electrical heater comprising a flexible sheet with integrated electrical tracks. The flexible sheet may comprise two flexible films, wherein at least one electrical track is arranged between the two flexible films. The sheet may be a sheet with a central portion, and at least one flap and/or a plurality of flexible tentacles may extend from the central portion in the tank or on/in the module. Using an electrical heater has the advantage that immediate heater power is available reducing the start-up time at cold temperatures. A supply rate of molten aqueous solution by the electrical heater may be between 150 and 350 g/h. The electrical heater may be controlled by a controller in function of the engine temperature, in order to heat more when the engine temperature is too low and less when the engine temperature is increasing.

In exemplary embodiments of the invention a tank 100, 200 may comprise a bottom shell and a top shell. The tank 100, 200 may be made of a plastic material, preferably a polyolefin material, e.g. a material comprising PE or PP.

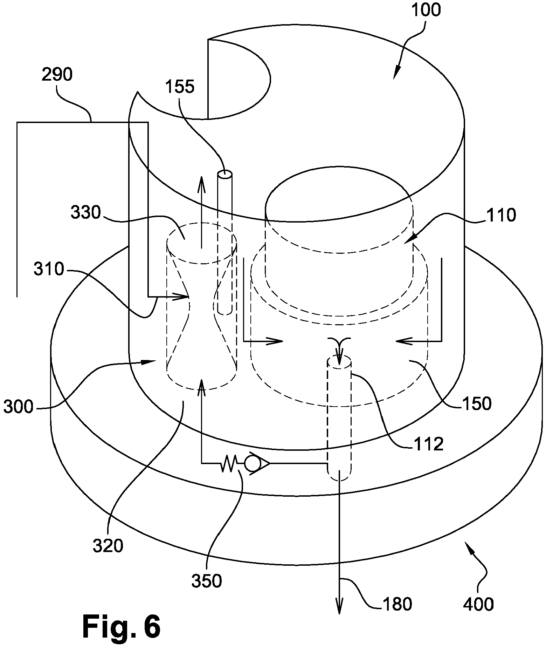

Now a more detailed exemplary embodiment of module 400 will be described with reference to figure 6. Module 400 is adapted for mounting in an opening of a bottom wall of a tank. The module 400 has an integrated first compartment 100 for receiving aqueous solution L, with the shape of a bowl. Module 400 comprises a feed pump unit 110 e.g. with a motor (e.g. a BLDC motor) and a gear pump, a jet pump 300, and a heater (not shown). Jet pump 300 has a suction inlet 310, a pressure inlet 320 and an outlet 330. Feed pump unit 110 is further connected for pumping aqueous solution along a bypass circuit including valve 350 and jet pump 300. In the suction mode, the flow goes from an inlet 111 of the feed pump unit 110 to an outlet 112 of feed pump unit 110, through valve 350 to pressure inlet 320 of jet pump 300, to outlet 330 of jet pump 300. Suction inlet 310 is connected to a suction line 290 arranged for receiving aqueous solution from second compartment 200. Outlet 330 of jet pump 300 is arranged for returning aqueous solution from suction inlet 310 and from pressure inlet 320 to first compartment 100.

Feed pump unit 110 has an inlet 111 at a lower portion of feed pump unit 110 and an outlet 112 also at the bottom of feed pump unit 110, e.g. below a gear pump thereof. Outlet 112 is connected to a feed line 180, and to a bypass line section including valve 350 extending sideward, partly underneath pump unit 110, towards jet pump 300. Jet pump 300 is extending upwardly in module 400, such that the aqueous solution is recirculated upwardly and returned in first compartment 100 at a position which is higher than pump outlet 112, and preferably also higher than pump inlet 111. Jet pump 300 is located adjacent to feed pump unit 110, and returns the aqueous solution into first compartment 100. A heater may be provided adjacent the inner walls of first compartment 100. The heater is preferably an electrical heater, e.g. a flexible electrical heater, optionally with flexible tentacles extending in and/or around various areas of the first compartment 100. However, it is also possible to provide non-flexible electrical heating elements (not shown), e.g. PTC heating elements, attached to or integrated in module 400, e.g. attached to the inside and/or the outside of the first compartment, or in wall elements of first compartment 100.

A filter 150 is integrated in module 400, upstream of feed pump unit 110, in the injection mode, i.e. when aqueous solution is pumped by feed pump unit 110 out of feed pump outlet 121. In the illustrated embodiment the module 400 may contain an upper sealed compartment for the motor of feed pump unit 110 and a lower compartment for the pump of feed pump unit 110 and for filter 150. Aqueous solution enters the lower compartment, passes through filter 150 and leaves the lower compartment at outlet 112.

First compartment 100 may have an outer wall with a shape which is such that an inner volume is created for receiving feed pump unit 110 and jet pump 300, and a small outer volume for receiving a level sensor 155. The outer wall of first compartment 100 may be shaped to surround partially level sensor 155. In that manner damage to the level sensor is avoided.

Although not illustrated, module 400 may further comprise a quality sensor, e.g. arranged in series with valve 350 or in the upwardly extending line containing jet pump 300, to sense the quality of the aqueous solution. Preferably the quality sensor is arranged downstream of jet pump 300 to sense the quality of the aqueous solution leaving outlet 330, i.e. the quality of the mixture of aqueous solution from the second compartment 200 and the first compartment 100. Also module 400 preferably comprises a level sensor and/or a bio-decontamination device, e.g. a UV bio-decontamination device. Preferably the bio-decontamination device is arranged downstream of jet pump 300 to bio-decontaminate the aqueous solution leaving outlet 330, i.e. the mixture of aqueous solution from the second compartment 200 and the first compartment 100.

Whilst the principles of the invention have been set out above in connection with specific embodiments, it is to be understood that this description is merely made by way of example and not as a limitation of the scope of protection which is determined by the appended claims.

## Claims

1. A vehicle system comprising:
a first compartment (100) and a second compartment (200), both being adapted for storing an aqueous solution (L);
a feed pump unit (110) having a feed pump outlet (112) for feeding an injector in an injection mode of the feed pump unit with aqueous solution of the first compartment, said feed pump unit being capable of selectively operating in the injection mode and in a suction mode;
a bypass circuit (800) between the feed pump outlet and the interior of the first compartment, said bypass circuit including a jet pump (300) having a suction inlet (310), a pressure inlet (320) and a jet pump outlet (330) arranged for returning aqueous solution to the first compartment; said suction inlet (310) being arranged for receiving aqueous solution from the second compartment;
said bypass circuit being configured to be drawing aqueous solution from the second compartment through the suction inlet when the feed pump unit is operating in the suction mode and not to be drawing aqueous solution from the second compartment when the feed pump unit operates in the injection mode.

2. The vehicle system of claim 1, wherein the feed pump unit is capable of generating a first pressure below a predetermined threshold pressure in the injection mode and a second pressure above the predetermined threshold pressure in the suction mode; and wherein the bypass circuit includes a valve (350; 350') configured to open in the suction mode, and to close in the injection mode.

3. The vehicle system of the preceding claim, further comprising a controller configured to control the feed pump unit to generate a first pressure below the predetermined threshold pressure in the injection mode and to generate a second pressure above the predetermined threshold pressure in the suction mode.

4. The vehicle system of claim 2 or 3, wherein the predetermined threshold pressure is higher than 5 bar.

5. The vehicle system of any preceding claim 2-4, wherein the valve is a mechanical valve.

6. The vehicle system of any preceding claim 2-5, wherein the valve is included between the feed pump outlet and the pressure inlet of the jet pump and configured such that it opens when the feed pump unit operates in the suction mode.

7. The vehicle system of any preceding claim 2-5, wherein the valve is connected to the suction inlet and configured such that it opens when the feed pump unit operates in the suction mode.

8. The vehicle system of claim 6 or 7, further comprising an orifice element (351) between the feed pump outlet and the pressure inlet of the jet pump.

9. The vehicle system of claim 7, optionally in combination with claim 8, further comprising a check valve (352) between the feed pump outlet and the pressure inlet of the jet pump, said check valve being configured to open when the pressure drop across the check valve is above a predetermined value, said predetermined value being lower than 100 mbar.

10. The vehicle system of any preceding claim 2-9, wherein the feed pump unit, the jet pump and the valve are included in a module.

11. The vehicle system of any preceding claim, wherein the first and/or the second compartment is vented.

12. The vehicle system of any preceding claim, wherein the second compartment (200) is a tank, and wherein the first compartment (100) is located in the second compartment.

13. The vehicle system of claim 10 and 12, wherein the first compartment is integrated in the module (400) and the module is arranged in an opening in a wall of the tank; and/or wherein the tank (200) is provided with a filler pipe (240); and/or
wherein the tank (200) has a bottom wall (201), a top wall (202) and a sidewall (203) connecting the bottom wall with the top wall, wherein an opening is arranged in the bottom wall, wherein, in the mounted position of the tank, the bottom wall corresponds with the lowest face of the tank, and wherein the module (400) is mounted in the opening in the bottom wall of the tank.

14. The vehicle system of any one of the claims 1-11, wherein the first compartment is a first tank (100), and the second compartment is a second tank (200).

15. The vehicle system of the preceding claim, wherein an overflow line (210) extends between the first tank and the second tank, and one of said first and second tank is at a higher level than the other one of said first and second tank, wherein said one is provided with a filler pipe; and/or
wherein the first tank (100) is provided with a filler pipe (140) and wherein a filler line (220) extends between the filler pipe (140) and the second tank (200); and/or
wherein the first tank has a bottom wall (101), a top wall (102) and a sidewall (103) connecting the bottom wall (101) with the top wall (102), wherein an opening is arranged in the bottom wall (101), wherein, in the mounted position of the first tank (100), the bottom wall corresponds with the lowest face of the first tank, and wherein a module (400) containing the feed pump unit and/or the jet pump is mounted in the opening in the bottom wall of the first tank.

16. The vehicle system of any preceding claim, further comprising:
an air intake line (710) upstream of a combustion chamber (700) of an internal combustion engine;
an injector (600) configured for injecting aqueous solution in the air intake line or in the combustion chamber;
a feed line (180) between the feed pump outlet and the injector, for feeding said injector with aqueous solution out of the first compartment (100).

17. The vehicle system of any preceding claim, further comprising any one or more of the following components:
• a heater (120) configured and arranged for heating at least a flow path through the feed pump unit and the bypass circuit;
• a level sensor (155) configured for sensing a level of the aqueous solution in the first compartment, wherein the controller is configured for operating the feed pump unit in the suction mode, when a level of the aqueous solution in the first compartment is below a predetermined level;
• a quality sensor arranged downstream of the jet pump to sense the quality of the aqueous solution leaving the jet pump outlet;
• a filter (150) upstream of the feed pump unit for filtering aqueous solution entering the feed pump unit;
• a bio-decontamination device downstream of the jet pump for bio-decontaminating aqueous solution leaving the jet pump outlet.
